# EUROPEAN PATENT APPLICATION

(11) **EP 4 773 459 A1**
(43) Date of publication of application: **08.07.2026**
(21) Application number: 24857744.7
(22) Date of filing: 28.03.2024
(51) Int. Cl.: H02J 7/00, B60L 53/60, B60L 53/31

(54) **POWER MANAGEMENT METHOD FOR A PLURALITY OF CHARGING DEVICES**

(30) Priority: 31.08.2023 CN 202311124485
(71) Applicant: Sungrow Charging Technology Co., Ltd., Hefei, Anhui 230088 (CN)
(72) Inventor: NING, Bo, Hefei, Anhui 230088 (CN); ZHANG, Lei, Hefei, Anhui 230088 (CN); CHEN, Chaoqi, Hefei, Anhui 230088 (CN)
(74) Representative: DREISS Patentanwälte PartG mbB
(86) International application number: PCT/CN2024/084490
(87) International publication number: WO 2025/044193

(57) **Abstract**

A power management method for a plurality of charging devices includes: obtaining, by the primary device, power information of a secondary device and power information of the primary device to obtain power information of the plurality of charging devices; obtaining, by the primary device, power information of a charging station where the plurality of charging devices are located; and performing, by the primary device, power regulation on the plurality of charging devices based on the power information of the plurality of charging devices and the power information of the charging station.

## Description

### CROSS-REFERENCE TO RELATED APPLICATION

This application is based on and claims priority to Chinese Patent Application No. 2023111244850 filed on August 31, 2023, the entire contents of which are incorporated herein by reference.

### FIELD

The present disclosure relates to the field of charging technologies, and more particularly, to a power management method for a plurality of charging devices, a charging device, and a charging station.

### BACKGROUND

When a charging station is built, the total power of all charging piles in the station is often greater than the capacity of transformers in the station. To prevent the transformer from being overloaded and damaged due to excessive charging power during use, it is necessary to perform power management for the charging station.

At present, the most common practice is to add an energy regulation terminal in the charging station. The energy regulation terminal collects electric energy meter data and performs the power management for the charging device in combination with the limited power issued by the platform. However, this method requires the addition of the terminal device, which increases the construction costs of the station. In addition, since all the charging piles are connected to the platform through the energy regulation terminal, if the regulation terminal fails, not only is the power management functionality unable to be realized, but also the entire charging station system is paralyzed and fails to operate.

### SUMMARY

The present disclosure aims to solve at least one of the technical problems in the related art. To this end, the present disclosure provides a power management method for a plurality of charging devices, a charging device, and a charging station. Each of the plurality of charging devices can implement power management functionality, which can effectively prevent overload of a transformer in the station without increasing construction costs of the station, and guarantee stability of operation of the charging station.

The present disclosure provides a power management method for a plurality of charging devices. The plurality of charging devices are communicatively connected to form a local area network. One of the plurality of charging devices in the local area network serves as a primary device and the remaining one or more charging devices serves as secondary devices. The method includes: obtaining, by the primary device, power information of the secondary devices and power information of the primary device to obtain power information of the plurality of charging devices; obtaining, by the primary device, power information of a charging station where the plurality of charging devices are located; and performing, by the primary device, power regulation on the plurality of charging devices based on the power information of the plurality of charging devices and the power information of the charging station.

According to the power management method for the plurality of charging devices in the present disclosure, by designating one of the plurality of charging devices in the station as the primary device to perform power regulation on all charging devices in the station, no additional energy regulation terminal is required. This effectively prevent overload of the transformer without increasing the construction costs of the station, while enabling power management functionality for all the charging devices in the station, thereby guaranteeing the stability of the operation of the charging station.

According to some embodiments of the present disclosure, the method further includes: re-electing, in response to a first primary device being in an offline state, a second primary device from the secondary devices in the local area network, and performing, by the second primary device, power regulation on the charging devices other than the first primary device.

According to some embodiments of the present disclosure, the method further includes, subsequent to re-electing the second primary device from the secondary devices in the local area network: designating, in response to the first primary device returning to an online state, the first primary device as a secondary device in the local area network, and performing, by the second primary device, power regulation on a charging device among the plurality of charging devices corresponding to the first primary device.

According to some embodiments of the present disclosure, said determining that the first primary device is in the offline state includes: determining, in response to a heartbeat response between the first primary device and the secondary devices failing, that the first primary device is in the offline state.

According to some embodiments of the present disclosure, the primary device is elected by, for each of the plurality of charging devices: broadcasting, by the charging device, a device number corresponding to the charging device in the local area network; establishing, by the charging device, a device list of the local area network based on its own device number and all received device numbers; and electing, by the charging device, the primary device based on the device list according to a target election rule.

According to some embodiments of the present disclosure, the target election rule is to elect the charging device with the smallest or largest device number in the device list as the primary device.

According to some embodiments of the present disclosure, said performing, by the primary device, the power regulation on the plurality of charging devices based on the power information of the plurality of charging devices and the power information of the charging station includes: performing, by the primary device, power regulation on the plurality of charging devices based on the power information of the plurality of charging devices, the power information of the charging station, and a power limit of the charging station.

The present disclosure provides a charging device. The charging device includes: a power management module configured to serve as a primary device or a secondary device to execute the above-described power management method for the plurality of charging devices.

The charging device in the present disclosure may serve as the primary device to perform the power regulation on all charging devices in the station, and may also serve as the secondary device to upload power information to the primary device. The power management module implements power management functionality, effectively guaranteeing the stability of the operation of the charging station.

The present disclosure provides a charging station. The charging station includes: a switch; at least two charging devices, each of at least two charging devices having a first end connected to a transformer and a second end connected to the switch; and an electric energy meter having a first end connected to the transformer and a second end connected to the switch, the electric energy meter being configured to collect power information of the charging station. The electric energy meter and the at least two charging devices form a local area network. One of at least two charging devices in the local area network serves as a primary device and the remaining one or more charging device serve as secondary devices. The primary device is configured to perform power regulation on the at least two charging devices based on power information of the at least two charging devices and power information of the charging station.

According to the charging station in the present disclosure, by designating one of the at least two charging devices in the station as the primary device to perform power regulation on all the charging devices in the station, no additional energy regulation terminal is required. This effectively prevent overload of the transformer without increasing the construction costs of the station, while enabling power management functionality for the charging devices in the station, thereby guaranteeing the stability of the operation of the charging station.

According to some embodiments of the present disclosure, the secondary devices are further configured to re-elect, in response to a first primary device being in an offline state, a second primary device from the secondary devices in the local area network. The second primary device is configured to perform power regulation on the charging devices other than the first primary device.

According to some embodiments of the present disclosure, the switch is connected to a public network.

The present disclosure provides an electronic device. The electronic device includes a memory, a processor, and a computer program stored in the memory and executable on the processor stored thereon. The computer program, when executed by the processor, implements the above-described power management method for the plurality of charging devices.

The present disclosure provides a non-transitory computer-readable storage medium having a computer program stored thereon. The computer program, when executed by a processor, implements the above-described power management method for the plurality of charging devices.

The present disclosure provides a computer program product including a computer program. The computer program, when executed by the processor, implements the above-described power management method for the plurality of charging devices.

Additional aspects and advantages of embodiments of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural diagram of a charging station according to an embodiment of the present disclosure.
FIG. 2 is a schematic flowchart of a power management method for a plurality of charging devices according to an embodiment of the present disclosure.
FIG. 3 is a first schematic flowchart of electing a primary device in a charging station according to an embodiment of the present disclosure.
FIG. 4 is a second schematic flowchart of electing a primary device in a charging station according to an embodiment of the present disclosure.
FIG. 5 is a third schematic flowchart of electing a primary device in a charging station according to an embodiment of the present disclosure.
FIG. 6 is a schematic structural diagram of an electronic device according to an embodiment of the present disclosure.

Reference numerals of the accompanying drawings:
Transformer 110, electric energy meter 120, charging device 130, switch 140.

### DETAILED DESCRIPTION OF THE EMBODIMENTS

Technical solutions according to embodiments of the present disclosure will be described clearly below in combination with accompanying drawings of the embodiments of the present disclosure. Obviously, the embodiments described below are only some embodiments of the present disclosure, rather than all embodiments of the present disclosure. On a basis of the embodiments of the present disclosure, all other embodiments obtained by those skilled in the art shall fall within the protection scope of the present disclosure.

The terms such as "first" and "second" in the description and claims of the present disclosure are used to distinguish similar objects, rather than to describe a specific sequence or order. It should be understood that data used in this way can be interchanged with each other under appropriate circumstances, such that the embodiments of the present disclosure can be implemented in a sequence other than those illustrated in the figures or described in the present disclosure. Further, that objects distinguished by "first", "second", etc. generally belong to one class, and the number of objects is not limited. For example, one or more of the first object can be provided. In addition, "and/or" in the description and claims represents at least one of the correlated objects, and the symbol "/" generally indicates an "or" relationship between the correlated objects preceding and succeeding the symbol.

A power management method for a plurality of charging devices 130, a charging device 130, a charging station, an electronic device, and a readable storage medium according to the embodiments of the present disclosure are described in detail below through specific embodiments and application scenarios in combination with the drawings.

The embodiments of the present disclosure provide a power management method for a plurality of charging devices 130. The method may be applied to a charging station including the plurality of charging devices 130.

Each of the plurality of charging devices 130 in the charging station can implement power management functionality, which can effectively prevent a transformer 110 in the charging station from being overloaded without increasing construction costs of the station, while guaranteeing stability of operation of the charging station.

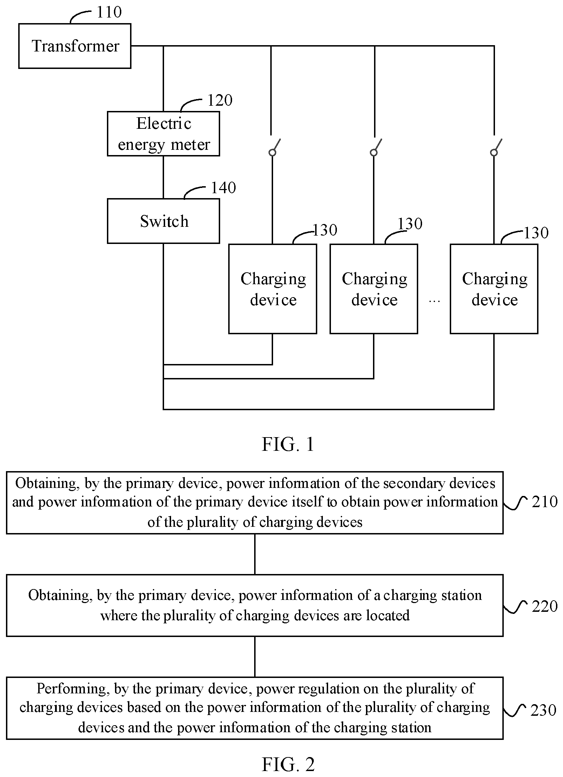

As illustrated in FIG. 1, the charging station according to the embodiments of the present disclosure includes: a switch 140, at least two charging devices 130, and an electric energy meter 120.

Each of the at least two charging devices 130 is configured to charge a vehicle, work machinery, etc., and may be a direct current charging pile or an alternating current charging pile.

Each of the at least two charging devices 130 has a first end connected to a transformer 110 and a second end connected to the switch 140.

The transformer 110 can be connected to an external power grid and supplies electric energy to the plurality of charging devices 130. Total power of all charging devices 130 in the charging station may exceed a rated capacity of the transformer 110. Therefore, the power of the charging devices 130 can be managed to prevent the transformer 110 from being overloaded and damaged due to excessive charging power during use.

In this embodiment, the electric energy meter 120 is electrically connected to the transformer 110 and the plurality of charging devices 130. The electric energy meter 120 is configured to collect power information of the charging station.

The electric energy meter 120 has a first end connected to the transformer 110 and a second end connected to the switch 140.

In practice, the electric energy meter 120 may be disposed after the transformer 110 and before the plurality of charging devices 130. That is, the electric energy meter 120 serves as a device for sampling at an incoming line end and can collect overall power information of the charging station.

It should be noted that, the power information of the charging station collected by the electric energy meter 120 includes not only power information of all the charging devices 130 in the charging station, but also power information of other loads other than the charging devices 130 in the charging station. Based on the power information of the charging station collected by the electric energy meter 120, an overall load situation of the charging station can be accurately determined.

The electric energy meter 120 and the at least two charging devices 130 form a local area network. One of the at least two charging devices 130 in the local area network serves as a primary device and the remaining charging devices 130 are secondary device in the local area network.

The local area network refers to a group of network devices in the same geographic location and communication networks connecting them. Devices in the local area network can be in communication with each other, achieving data transmission and sharing.

In this embodiment, the electric energy meter 120 is communicatively connected to the plurality of charging devices 130 to form the local area network. A local area network connection method between the electric energy meter 120 and the plurality of charging devices 130 may be a wired connection or a wireless connection. For example, the wired connection may be an Ethernet-based connection, and the wireless connection may be a WiFi-based connection.

It should be noted that, each of the plurality of charging devices 130 is equipped with a corresponding power management module. The power management module may be a virtual module embedded within the charging device 130. The power management module has data collection functionality and can obtain real-time power information of the charging device 130, such as required power and output power.

It should be understood that, the power management module of the charging device 130 has a communication capability. In the local area network, a power management module of the primary device can obtain the power information of the charging station collected by the electric energy meter 120, as well as power information of the other charging devices 130 serving as the secondary devices. The charging device 130 can also send a control instruction to power management modules of the secondary devices. In contrast, each of the power management modules serving as the secondary devices can report the collected power information of the charging device 130 and receive the control instruction sent by the primary device to perform power regulation on the charging device 130.

It should be noted that, the power management module also has data collection and power regulation functionality. The power management module of the primary device can collect the power information of its corresponding charging device 130 and regulate the power of the charging device 130. The power management module of the primary device performs power management for all the charging devices 130 in the charging station based on the power information of the charging station and the power information of all the charging devices 130 in the charging station.

The embodiments of the present disclosure provide a power management method for a plurality of charging devices 130. The plurality of charging devices 130 are communicatively connected to form a local area network. One of the plurality of charging devices 130 in the local area network serves as a primary device and the remaining charging devices 130 serve as secondary devices.

The primary device executes the power management method by outputting a control instruction to a plurality of secondary devices based on the power information of the plurality of charging devices 130 and the power information of the charging station. The control instruction is used to perform the power regulation on the charging devices 130 corresponding to the secondary devices. Each of the secondary devices executes the power management method by sending its own power information to the primary device.

As illustrated in FIG. 2, the power management method for the plurality of charging devices includes an operation at step 210 to an operation at step 230.

At step 210, power information of the secondary device and power information of the primary device are obtained by the primary device to obtain power information of the plurality of charging devices 130.

In the local area network, the charging device 130 serving as the primary device can obtain the power information of the charging devices 130 corresponding to the secondary devices, and can also obtain its own power information.

At step 220, power information of a charging station where the plurality of charging devices 130 are located is obtained by the primary device.

At this step, the primary device can obtain the overall power information of the charging station through the electric energy meter 120 in the local area network.

It should be noted that, the power information of the charging station collected by the electric energy meter 120 includes not only the power information of all the charging devices 130 in the charging station, but also the power information of other loads other than the charging devices 130 in the charging station. Based on the power information of the charging station collected by the electric energy meter 120, the overall load situation of the charging station can be accurately determined.

At step 230, power regulation is performed on the plurality of charging devices by the primary device based on the power information of the plurality of charging devices and the power information of the charging station.

At this step, the primary device analyzes based on the power information of the plurality of charging devices 130 and the power information of the charging station, and sends the control instruction to the secondary devices to perform the power regulation on the charging devices 130 corresponding to the secondary devices. In addition, the primary device can also send the control instruction to perform the power regulation on the charging device 130 corresponding to the primary devices.

In the related art, the power regulation is implemented through information exchange between charging piles in the station. However, only one charging pile responsible for energy regulation in the station collects electric energy meter information. If this charging pile is damaged, the system is unable to collect information from the electric energy meter and implement the power management functionality, causing the entire charging station system to be paralyzed and unable to operate.

In the embodiments of the present disclosure, the electric energy meter 120 and the plurality of charging devices 130 form the local area network. The primary device in the local area network performs the power regulation on all the charging devices 130 in the charging station (including the primary device), without a need for an external energy management terminal. This effectively prevents overload of the transformer 110 without increasing the construction costs of the station. Each of the plurality of charging devices 130 can access information collected by the electric energy meter 120 in the local area network, and possesses the capability to become the primary device. When a certain charging device 130 or a power management module thereof fails, a new charging device 130 can take over as the primary device to implement the power management functionality, thereby ensuring the stability of the operation of the charging station.

It should be noted that, the electric energy meter 120 in the local area network serves as a device that provides power information of the charging station. Using the power information reported by the electric energy meter 120, the overall load situation of the charging station can be accurately determined, ensuring that the transformer 110 does not become overloaded and improving safety of the operation of the charging station.

According to the power management method for the plurality of charging devices 130 provided in the embodiments of the present disclosure, by designating one of the plurality of charging devices 130 in the station as the primary device to perform power regulation on all the charging devices in the station, no additional energy regulation terminal is required. This effectively prevent overload of the transformer 110 without increasing the construction costs of the station, while enabling power management functionality for all the charging devices 130 in the station, thereby guaranteeing the stability of the operation of the charging station.

In some embodiments, the step 230 of performing the power regulation on the plurality of charging devices 130 by the primary device based on the power information of the plurality of charging devices 130 and the power information of the charging station includes: performing power regulation on the plurality of charging devices 130 by the primary device based on the power information of the plurality of charging devices 130, the power information of the charging station, and a power limit of the charging station.

In this embodiment, the primary device performs the power regulation on the plurality of charging devices 130 based on the power information of the plurality of charging devices 130, the power information of the charging station, and the power limit of the charging station, which ensures that the total power of the plurality of charging devices 130 does not exceed the power limit of the charging station, effectively preventing the transformer 110 from being overloaded.

In practical implementation, the power limit of the charging station may be a preset power value or a power value issued by a cloud.

In some embodiments, the power management method for the plurality of charging devices 130 further includes: in response to a first primary device being in an offline state, re-electing a second primary device from the secondary devices in the local area network, and performing, by the second primary device, power regulation on the charging devices 130 other than the first primary device.

In this embodiment, in response to the first primary device currently responsible for the power management being in an offline fault state, the second primary device is re-elected from the secondary devices to take over the power management functionality, improving the stability of the operation of the charging station.

It should be noted that, the offline state of the first primary device may result from communication failures in its power management module, making it unable to obtain data from the electric energy meter 120 and other charging devices 130 or unable to send the control instruction to other charging devices 130. Alternatively, it may be result from a failure in the charging device 130 corresponding to the first primary device, making it unable to provide power information of the charging device 130.

In the related art, only one charging pile that performs the energy regulation in the station collects data from the electric energy meter. When this charging pile is damaged, the system fails to collect data from the electric energy meter and is unable to implement the power management functionality, allowing the entire charging station system to be paralyzed.

In the embodiments of the present disclosure, when the first primary device fails and goes offline, a second primary device is automatically re-elected to take over the power management functionality of the system. The second primary device performs the power regulation on the charging devices 130 in the charging station other than the first primary device, ensuring implementation of the power management functionality and improving the stability of the operation of the charging station.

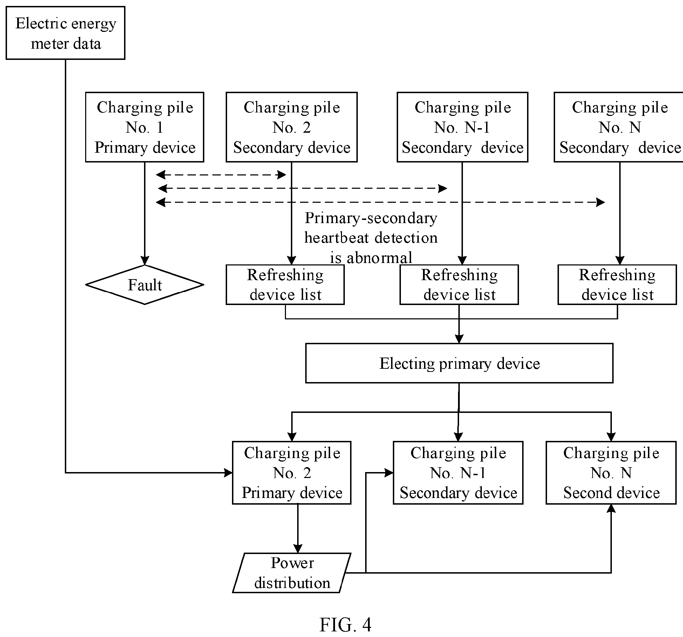

For example, as illustrated in FIG. 4, a charging pile No. 1 serves as the primary device, while a charging pile No. 2, ..., a charging pile No. N-1, and a charging pile No. N all serve as secondary devices.

When the charging pile No. 1 fails, each of the charging pile No. 2, ..., the charging pile No. N-1, and the charging pile No. N refresh its device list and re-elect a primary device.

In the current device list, the charging pile No. 2 has the smallest device number. Therefore, the charging pile No. 2 serves as the primary device, and the remaining charging piles No.3 to No. N serve as the secondary devices. The primary device samples data from the electric energy meter and from the charging piles corresponding to other secondary devices, and performs power distribution on all the charging piles in the charging station.

In some embodiments, the power management method for the plurality of charging devices 130 may further includes, subsequent to re-electing the second primary device from the secondary devices in the local area network: in response to the first primary device returning to an online state, designating the first primary device as a secondary device, and performing, by the second primary device, power regulation on the charging device 130 corresponding to the first primary device.

In this embodiment, when the previously faulty first primary device returns to the online state, the previously faulty first primary device rejoins the device list of the local area network. In this case, the first primary device participates in the power regulation as a secondary device. That is, the first primary device receives the control instruction of the second primary device for power regulation.

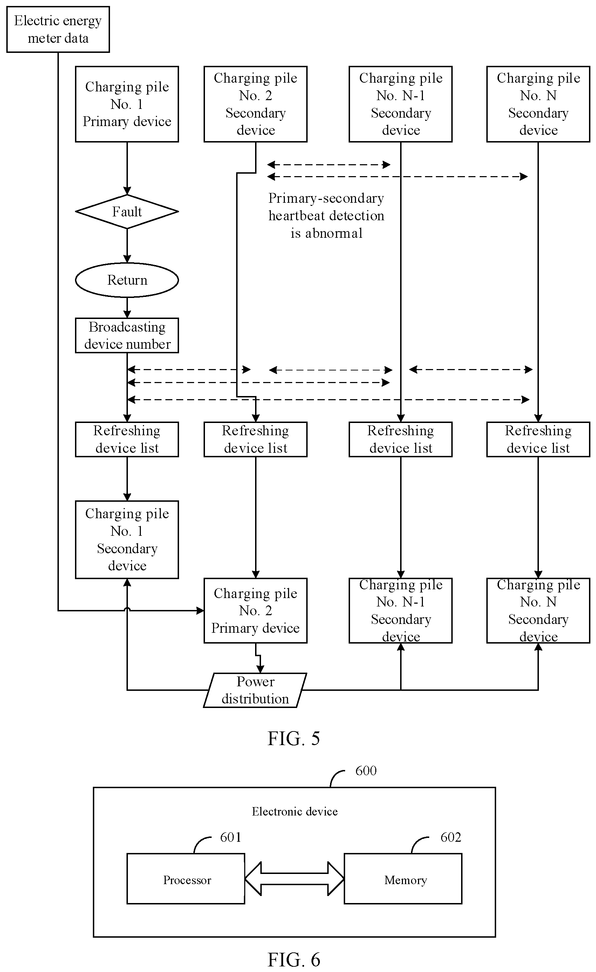

For example, as illustrated in FIG. 5, when the faulty charging pile No.1 returns the online state, the faulty charging pile No.1 broadcasts its own device number, and each of the charging pile No. 1, the charging pile No. 2, ..., the charging pile No. N-1, and the charging pile No. N refresh its device list.

It should be noted that, in the refreshed device list, although the charging pile No. 1 has the smallest device number, the charging pile No. 2 still serves as the primary device, and the charging piles No. 1, and No.3 to No. N all serve as the secondary devices. The primary device samples the electric energy meter data and the data of the charging piles corresponding to other secondary devices, and performs power distribution on all the charging piles in the charging station.

In some embodiments, said determining that the first primary device is in the offline state may include: in response to a heartbeat response between the first primary device and the secondary devices failing, determining that the first primary device is in an offline state.

In this embodiment, subsequent to electing the primary device, a real-time heartbeat connection is established between the primary device and the plurality of secondary devices. The online sate of the secondary devices is indicated through heartbeat information sent and responded to in the local area network. When the primary device or a secondary device no longer sends or respond to the heartbeat information, the primary device or the secondary device is determined to be in the offline state.

For example, as illustrated in FIG. 4, the charging pile No. 1 serves as the primary device, and the charging pile No. 2, ..., the charging pile No. N-1, and the charging pile No. N all serve as the secondary devices. The real-time heartbeat connection is established between the primary device and the plurality of secondary devices.

When the charging pile No. 1 fails, resulting in an abnormality in primary-secondary heartbeat detection, each of the remaining charging pile No. 2, ..., the charging pile No. N-1, and the charging pile No. N refresh its device list and re-elect the primary device.

In the current device list, the charging pile No. 2 has the smallest device number. Therefore, the charging pile No. 2 serves as the primary device, and the remaining charging piles No. 3 to No. N serve as the secondary devices. The primary device samples data from the electric energy meter and the charging piles corresponding to other secondary devices, and performs power distribution on all the charging piles in the charging station.

It should be understood that, when a certain secondary device fails and goes offline, the primary device is unable to obtain the power information of the charging device 130 corresponding to that secondary device. Each of the primary device and other secondary devices can refresh its device list, and the primary device no longer considers the power information corresponding to that secondary device when performing the power distribution.

In some embodiments, the primary device is elected by the following steps, performed by each of the plurality of charging devices 130: broadcasting its corresponding device number in the local area network; establishing a device list of the local area network based on the device number of the charging device and all received device numbers; and electing the primary device based on the device list according to a target election rule.

In this embodiment, each of the charging devices 130 in the charging station broadcasts its corresponding device number. Each of the charging devices 130 establishes the device list of the local area network based on the received device numbers and its own device number. The device list includes the device numbers corresponding to all the charging devices 130. The primary device in the local area network is elected based on a predetermined target election rule.

In some embodiments, the target election rule may be to select the charging device 130 with the smallest or largest device number in the device list as the primary device.

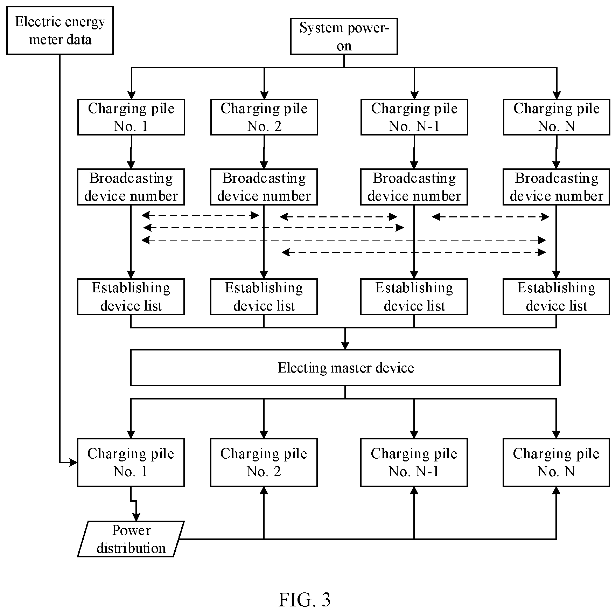

For example, as illustrated in FIG. 3, the charging station includes N charging piles. In response to the system being powered on, each of the charging piles broadcasts its corresponding device number.

A device number corresponding to the charging pile No. 1 is 1, a device number corresponding to the charging pile No. 2 is 2, and so on in a similar fashion.

Each of the N charging pile adds the device number broadcast in the local area network to its own device list, and selects the charging pile with the lowest device number as the primary device and assigns the others server as the secondary devices.

In this embodiment, the charging pile No. 1 has the smallest device number. Therefore, the charging pile No. 1 serves as the primary device, and the charging pile No. 2, ..., the charging pile No. N-1, and the charging pile No. N all serve as the secondary devices. The primary device samples data from the electric energy meter and the other charging piles corresponding to the secondary devices, and performs power distribution on all the charging piles in the charging station.

In the related art, all the charging piles in the station can obtain information from one another and issue power, which results in a single charging pile having a plurality of control instructions to execute. If calculations across different charging piles are inconsistent, conflicts may occur, leading to failure of the power management.

In the embodiments of the present disclosure, an election mechanism is used to ensure that only one primary device exists in the local area network. The primary device can collect information of the electric energy meter 120 and other charging devices 130, thereby preventing the plurality of charging devices 130 from sending power regulation information to other charging devices 130 simultaneously, ensuring the effectiveness and stability of the overall power management of the charging station.

The embodiments of the present disclosure further provide a charging device 130.

The charging device 130 includes a power management module configured to serve as a primary device or a secondary device to execute the above-described power management method for the plurality of charging devices 130.

The power management module of the charging device 130 has communication capabilities. In the local area network, the power management module of the primary device can obtain the power information of the charging station collected by the electric energy meter 120, as well as of power information of other charging device 130 serving as the secondary device. The power management module of the primary device can also send the control instruction to the power management module of the secondary device. In contrast, the power management module serving as the secondary device can report the collected power information of the charging device 130 and receive the control instruction sent by the primary device to perform power regulation on the charging device 130.

It should be noted that, the power management module also has data collection and power regulation functionality. The power management module of the primary device can collect power information of the charging device 130 corresponding to the primary device and regulate the power of the charging device 130. The power management module of the primary device performs power management for all the charging devices 130 in the charging station based on the power information of the charging station and the power information of all the charging devices 130 in the charging station.

The charging device 130 according to the present disclosure may serve as the primary device to perform the power regulation on all the charging devices 130 in the station, and may also serve as the secondary device to upload power information to the primary device. The power management module implements power management functionality, effectively guaranteeing the stability of the operation of the charging station.

The embodiments of the present disclosure further provide a charging station.

As illustrated in FIG. 1, the charging station includes a switch 140, at least two charging devices 130, and an electric energy meter 120. Each of at least two charging devices 130 has a first end connected to a transformer 110 and a second end connected to the switch 140. The electric energy meter 120 has a first end connected to the transformer 110 and a second end connected to the switch 140.The electric energy meter 120 is configured to collect power information of the charging station.

The electric energy meter 120 and the at least two charging devices 130 form a local area network. One of at least two charging devices 130 in the local area network serves as a primary device and the remaining charging devices 130 serve as secondary devices. The primary device is configured to perform power regulation on the at least two charging devices 130 based on power information of the at least two charging devices 130 in the charging station and power information of the charging station.

According to the charging station provided in the embodiments of the present disclosure, by designating one of the at least two charging devices 130 in the station as the primary device to perform power regulation on all the charging devices in the station, no additional energy regulation terminal is required. This effectively prevents the transformer 110 overload without increasing the construction costs of the station, while enabling power management functionality for all the charging devices 130 in the station, thereby guaranteeing the stability of the operation of the charging station.

In some embodiments, the secondary devices are further configured to: in response to a first primary device being in an offline state, re-elect a second primary device from the secondary devices in the local area network. The second primary device is configured to perform power regulation on a charging device 130 among the at least two charging devices 130 other than the first primary device.

In some embodiments, the switch 140 is connected to a public network.

The switch 140 can connect a plurality of Ethernet physical segments, isolate collision domains, and perform high-speed transparent switching and forwarding of communication data between the electric energy meter 120 and the plurality of charging devices 130.

In this embodiment, the switch 140 can be connected to a network cable that enables access to the public network. Therefore, all devices of the charging station are connected to the cloud via the switch 140, which realizes connection between all devices of the charging station and the cloud, allowing the cloud to monitor the operation of the charging station.

In some embodiments, as illustrated in FIG. 6, the embodiments of the present disclosure further provide an electronic device 600 including a processor 601, a memory 602, and a computer program stored in the memory 602 and executable on the processor 601. The program, when is executed by the processor 601, implements each process of the above-described power management method embodiments for the plurality of charging devices 130, and achieves the same technical effects. Details thereof will not be omitted here to avoid repetition.

It should be noted that, the electronic devices according to the embodiments of the present disclosure include the mobile electronic devices and the non-mobile electronic device described above.

The embodiments of the present disclosure further provide a non-transitory computer-readable storage medium having a computer program stored thereon. The computer program, when executed by a processor, implements each process of the above-described power management method embodiments for the plurality of charging devices 130, and achieves the same technical effects. Details thereof will not be omitted here to avoid repetition.

The processor is a processor in the electronic device described in the above embodiments. The readable storage medium includes a computer-readable storage medium such as a computer read-only memory (ROM), a random access memory (RAM), a magnetic disk, or an optical disk.

The embodiments of the present disclosure further provide a computer program product. The computer program product, when executed by a processor, implements the above-described power management method for the plurality of charging devices 130.

The processor is a processor in the electronic device described in the above embodiments. The readable storage medium includes a computer-readable storage medium such as a computer read-only memory (ROM), a random access memory (RAM), a magnetic disk, or an optical disk.

The embodiments of the present disclosure further provide a chip including a processor and a communication interface coupled to the processor. The processor is configured to run a program or an instruction to implement each process in the above-described power management method embodiments for the plurality of charging devices 130, and can achieve the same technical effect. Details thereof will not be omitted here to avoid repetition.

It should be understood that, the chip mentioned in the embodiments of the present disclosure can also be referred to as a system-level chip, a system-chip, a chip system, or a system-on-chip.

Further, in the present disclosure, it should be noted that terms "comprise", "include" or any other variations thereof are meant to cover non-exclusive including, such that the process, method, goods or device including a series of elements do not only include those elements, but further include other elements that are not explicitly listed, or further include inherent elements of the process, method, goods or device. When there are no more restrictions, an element limited with the statement "comprises a ..." does not exclude the presence of additional identical elements in the process, method, goods or device that includes the said element. In addition, it should be noted that the scope of the methods and devices in the embodiments of the present disclosure is not limited to performing functions in the order shown or discussed, and can also include performing functions in a substantially simultaneous manner or in the reverse order according to the functions involved. For example, the described methods can be performed in an order different from that described, and various steps can be added, omitted, or combined. In addition, features described with reference to certain examples can be combined in other examples.

From the above description of the implementations, it will be clear to those skilled in the art that the method in the above embodiments can be implemented with the aid of software and a necessary common hardware platform or can be implemented through hardware. In many cases, the former one is a better implementation. Based on this understanding, all of the technical solutions according to the embodiments of the present disclosure, or the part thereof that contributes to the related art, can be embodied in the form of a computer software product. The computer software product can be stored in a storage medium (such as a ROM/RAM, a disk, and an optical disk) and contain instructions to enable a terminal device (which can be a mobile phone, a computer, a server, a network device, etc.) to perform the method described in each of the embodiments of the present disclosure.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure and the protection scope of the claims as attached. These variations are to be encompassed by the protect scope of present disclosure.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A power management method for a plurality of charging devices, wherein the plurality of charging devices are communicatively connected to form a local area network, wherein one of the plurality of charging devices in the local area network serves as a primary device and the remaining one or more charging devices serve as secondary devices, the method comprising:
obtaining, by the primary device, power information of the secondary devices and power information of the primary device to obtain power information of the plurality of charging devices;
obtaining, by the primary device, power information of a charging station where the plurality of charging devices are located; and
performing, by the primary device, power regulation on the plurality of charging devices based on the power information of the plurality of charging devices and the power information of the charging station.

2. The power management method for the plurality of charging devices according to claim 1, further comprising:
re-electing, in response to a first primary device being in an offline state, a second primary device from the secondary devices in the local area network, and performing, by the second primary device, power regulation on a charging device among the plurality of charging devices other than the first primary device.

3. The power management method for the plurality of charging devices according to claim 2, further comprising, subsequent to re-electing the second primary device from the secondary devices in the local area network:
designating, in response to the first primary device returning to an online state, the first primary device as a secondary device in the local area network, and performing, by the second primary device, power regulation on the charging device corresponding to the first primary device.

4. The power management method for the plurality of charging devices according to claim 2 or claim 3, wherein said determining that the first primary device is in the offline state comprises:
determining, in response to a heartbeat response between the first primary device and the secondary devices failing, that the first primary device is in the offline state.

5. The power management method for the plurality of charging devices according to any one of claims 1 to 4, wherein the primary device is elected by, for each of the plurality of charging devices:
broadcasting, by the charging device, a device number corresponding to the charging device in the local area network;
establishing, by the charging device, a device list of the local area network based on the device number of the charging device and all received device numbers; and
electing, by the charging device, the primary device based on the device list according to a target election rule.

6. The power management method for the plurality of charging devices according to claim 5, wherein the target election rule is to elect the charging device with the smallest or largest device number in the device list as the primary device.

7. The power management method for the plurality of charging devices according to any one of claims 1 to 6, wherein said performing, by the primary device, the power regulation on the plurality of charging devices based on the power information of the plurality of charging devices and the power information of the charging station comprises:
performing, by the primary device, power regulation on the plurality of charging devices based on the power information of the plurality of charging devices, the power information of the charging station, and a power limit of the charging station.

8. A charging device, comprising:
a power management module configured to serve as a primary device or a secondary device to execute the power management method for the plurality of charging devices according to any one of claims 1 to 7.

9. A charging station, comprising:
a switch;
at least two charging devices according to claim 8, wherein each of at least two charging devices has a first end connected to a transformer and a second end connected to the switch; and
an electric energy meter having a first end connected to the transformer and a second end connected to the switch, wherein the electric energy meter is configured to collect power information of the charging station;
wherein the electric energy meter and the at least two charging devices form a local area network, one of at least two charging devices in the local area network serving as a primary device and the remaining one or more charging devices serving as secondary devices;
wherein the primary device is configured to perform power regulation on the at least two charging devices based on power information of the at least two charging devices and power information of the charging station.

10. The charging station according to claim 9, wherein the secondary devices are further configured to: re-elect, in response to a first primary device being in an offline state, a second primary device from the secondary devices in the local area network, the second primary device being configured to perform power regulation on a charging device among the at least two charging devices other than the first primary device.

11. The charging station according to claim 9 or claim 10, wherein the switch is connected to a public network.
